# EUROPÄISCHE PATENTSCHRIFT

(11) **EP 1 674 493 B1**
(45) Veröffentlichungstag und Bekanntmachung des Hinweises auf die Patenterteilung: **14.04.2010**
(21) Anmeldenummer: 05027146.9
(22) Anmeldetag: 13.12.2005
(51) Int. Cl.: C08G 18/40, C08G 18/66, C08G 18/76, B60R 13/02

(54) **Verfahren zur Herstellung von Polyurethan-Hartschaumstoffen**
Method of preparation of rigid polyurethane foams
Procédé de préparation de mousses rigides de polyuréthane

(30) Priorität: 24.12.2004 DE 102004062540
(43) Veröffentlichungstag der Anmeldung: 28.06.2006
(73) Patentinhaber: Bayer MaterialScience AG, 51368 Leverkusen (DE)
(72) Erfinder: Hollmann, Christoph, Dr., 42799 Leichlingen (DE); Seidel, Dieter, 51143 Köln (DE); Huland, Klaus-Werner, 42929 Wermelskirchen (DE)

(56) Entgegenhaltungen:
- EP-A- 0 437 787
- DE-A1- 4 333 795
- DE-A1- 19 905 989

## Beschreibung

Die vorliegende Erfindung betrifft überwiegend offenzellige, kaltverformbare, verdichtete Polyurethan-Hartschaumstoffe, ein Verfahren zu ihrer Herstellung sowie ihre Verwendung zur Herstellung von Automobil-Innenverkleidungen, insbesondere Dachhimmeln, Dachversteifungsplatten und Säulenverkleidungen.

Polyurethan-(PUR)-Hartschaumstoffe als Zwischenschicht für Sandwichstrukturen sowie deren Verwendung zur Herstellung von Automobil-Innenverkleidungen sind an sich bekannt.

Sandwichplatten zur Verwendung als Dachhimmel, Dachversteifungselement oder Säulenverkleidung werden heutzutage zumeist nach dem sogenannten Kaltformverfahren hergestellt. Dabei wird die PUR-Hartschaumstoffplatte beidseitig mit einem duromeren Klebstoff und Verstärkungsmaterialien, wie Glas- und/oder Naturfasermatten bzw. -vliesen und/oder Glasfaser-Rovings, sowie Deckschichten aus Papier, Thermoplastfolien und/oder Faservliesen und ggf. Dekorschichten versehen und in einem Werkzeug bei Temperaturen von 100 bis 150°C zu einem Sandwich verformt und verpresst.

Die Verwendung von warmverformbaren PUR-Hartschaumstoffen zur Herstellung von Innenverkleidungen von Kraftfahrzeugen wird beispielsweise im Kunststoff-Handbuch, Polyurethane, Band VII, Carl Hanser Verlag, München, Wien, 2. Auflage, 1983, S. 318-319 beschrieben.

In EP-A 0 239 906 werden thermisch verformbare, hitzevernetzbare PUR-Hartschaumstoffe durch Umsetzung von Polyisocyanaten mit Polyolkomponenten auf einer Doppeltransportbandanlage hergestellt. Als NCO-Gruppen blockierende Verbindungen werden ε-Caprolactam und/oder Nonylphenol eingesetzt, so dass beim Heißverformen durch eine Nachreaktion der Schaumstoff sich von einem eher thermoplastischen zu einem duroplastischen Material umwandelt.

In EP-A 0 437 787 wird ein diskontinuierliches Verfahren zur Herstellung von offenzelligen, kaltverformbaren PUR-Hartschaumstoffen mit Dichten von 25-30 kg/m³ durch Umsetzung von Mischungen aus Diphenylmethandiisocyanaten (MDI) und Polyphenyl-polymethylen-polyisocyanaten mit einem MDI-Gehalt von 70 bis 90 Gew.-% mit einer Komponente aus 50 bis 70 Gew.-% eines di- und/oder trifunktionellen Polyoxyalkylenpolyols mit einer Hydroxylzahl von 28 bis 600, 20 bis 35 Gew.-% eines difunktionellen Phthalsäurepolyesters mit einer Hydroxylzahl von 150 bis 440, 2 bis 10 Gew.-% Glycerin, 3,5 bis 7 Gew.-% Wasser, 0,3 bis 1 Gew.-% eines einbaufähigen tertiären Amin-Katalysators und 0,1 bis 2 Gew.-% eines Silicon-Schaumstabilisators beschrieben. Gemäß DE-A 4 333 795 können thermoplastisch verformbare PUR-Hartschaumstoffe durch Umsetzung von Mischungen aus Diphenylmethandiisocyanaten (MDI) und Polyphenyl-polymethylen-polyisocyanaten mit Mischungen aus Polyhydroxylverbindungen, welche 40 bis 60 Gew.-% eines trifunktionellen Polyoxyalkylenpolyols mit einer Hydroxylzahl von 350 bis 500, 15 bis 30 Gew.-% eines difunktionellen Polyoxyalkylenpolyols mit einer Hydroxylzahl von 200 bis 350, 5 bis 20 Gew.-% eines di- bis trifunktionellen Polyoxyalkylenpolyols mit einer Hydroxylzahl von 25 bis 40 und 15 bis 30 Gew.-% eines Dialkylenglycols enthalten, hergestellt werden. Die kontinuierlich oder diskontinuierlich hergestellten Schaumstoffblöcke haben Dichten von 18 bis 45 kg/m³. Die zur Dachhimmelfertigung nach dem Kalt- oder Warmformverfahren benötigten Schaumstoffplatten in bevorzugten Wandstärken von 6-20 mm werden durch horizontales Spalten aus den Blöcken erhalten.

Nachteilig bei dem Prozess der Schaumstoffplattenerzeugung aus PUR-Hartschaumstoffblöcken ist der Aufwand für das Spalten oder Sägen sowie die anfallenden Abfallmengen aus dem Kuppen-, Boden- und Randbereich der Blöcke.

Die Aufgabe der vorliegenden Erfindung bestand darin, auf einem Doppeltransportband kontinuierlich überwiegend offenzellige PUR-Hartschaumstoffplatten herzustellen, die nach dem sogenannten Kaltformverfahren zu Automobil-Innenverkleidungen verpresst werden können.

Diese Aufgabe konnte überraschenderweise mit dem nachstehend näher beschriebenen Verfahren gelöst werden.

Gegenstand der Erfindung ist ein kontinuierliches Verfahren zur Herstellung von kaltverformbaren, verdichteten, offenzelligen Polyurethan-Hartschaumstoffen nach dem Doppeltransportband-Verfahren, wobei
I) die Komponente A) und die Komponente B) in einem Mischaggregat bei Temperaturen von 20 bis 35°C in einem Verhältnis gemischt werden, dass die NCO-Kennzahl 95 bis 125 beträgt,
II) die Mischung aus I) zwischen die beiden Deckschichten einer Doppeltransportbandanlage bei Temperaturen von 40 bis 100°C eingetragen wird,
III) nach dem Durchlaufen des Bandes und nach Abkühlung gegebenenfalls eine oder beide Deckschichten entfernt werden und abschließend das abgekühlte Produkt gegebenenfalls geschnitten wird, dadurch gekennzeichnet, dass als Komponente A)
   a) eine organische Polyisocyanatkomponente aus
      a1) 70 bis 90 Gew.-% monomeres Diphenylmethandiisocyanat mit einem Anteil von 18 bis 32 Gew.-%, bezogen auf die organische Polyisocyanatkomponente a, 2,4'-Diphenylmethandiisocyanat und
      a2) 10 bis 30 Gew.-%Polyphenylpolymethylenpolyisocyanat
         und dass als Komponente B)
   b) Polyhydroxylverbindungen aus
      b1) 20 bis 35 Gew.-%, bezogen auf die Komponente B), Polyoxyalkylenpolyolen mit einer Funktionalität von 2 bis 3 und mit einer Hydroxylzahl von 25 bis 40,
      b2) 20 bis 30 Gew.-%, bezogen auf die Komponente B), Polyoxyalkylenpolyolen mit einer Funktionalität von 3 bis 4 und mit einer Hydroxylzahl von 400 bis 650,
      b3) 5 bis 15 Gew.-%, bezogen auf die Komponente B), Polyoxyalkylenpolyolen mit einer Funktionalität von 2 und mit einer Hydroxylzahl von 150 bis 550,
      b4) 15 bis 30 Gew.-%, bezogen auf die Komponente B), Polyesterpolyolen mit einer Funktionalität von 2 und mit einer Hydroxylzahl von 200 bis 350,
      b5) 4 bis 7 Gew.-%, bezogen auf die Komponente B), Glycerin
   c) 3,5 bis 5,5 Gew.-%, bezogen auf die Komponente B), Wasser als Treibmittel,
   d) 0,5 bis 4 Gew.%, bezogen auf die Komponente B), Katalysatoren,
   e) 0,5 bis 2 Gew.-%, bezogen auf die Komponente B), Schaumstabilisatoren,
   f) 1 bis 3,5 Gew.-%, bezogen auf die Komponente B), Zellöffner,
   g) gegebenenfalls Hilfsmitteln und/oder Zusatzstoffen,
eingesetzt werden.

Zu den Katalysatoren d) gehören Verbindungen, die die Reaktion der reaktive Wasserstoffatome, insbesondere Hydroxylgruppen, enthaltenden Reaktionskomponenten b) sowie des Wassers mit den organischen Polyisocyanaten a) beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Dimethylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Bevorzugt werden gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol und/oder die in EP-A 0 629 607 beschriebenen Umsetzungsprodukte aus Acetessigsäureethylester, Polyetherpolyolen und 1-(Dimethylamino)-3-amino-propan verwendet.

Als Polyisocyanat-Komponente werden Mischungen aus 4,4'-, 2,4'- und 2,2'-Diphenylmethandiisocyanaten und Polyphenyl-polymethylen-polyisocyanaten (roh-MDI) eingesetzt. Besonders bewährt haben sich Roh-MDI-Typen mit einem Diphenylmethan-diisocyanat-Isomerengehalt von 70 bis 90 Gew.-% sowie insbesondere einem Gehalt von 18 bis 32 Gew.-% an 2,4'-Diphenylmethan-diisocyanat, bezogen auf die insgesamt eingesetzte Roh-MDI-Mischung.

Als Komponente b1) werden di- und/oder trifunktionelle Polyoxyalkylenpolyole im Hydroxylzahlbereich von 25 bis 40 verwendet, die vorzugsweise durch Umsetzung von Ethylenoxid und/oder Propylenoxid mit dreiwertigen Polyolen, wie z.B. Glycerin, Trimethylolpropan zugänglich sind.

Als Komponente b2) werden tri- und/oder tetrafunktionelle Polyoxyalkylenpolyole im Hydroxylzahlbereich von 400 bis 650 verwendet, die vorzugsweise durch Umsetzung von Ethylenoxid und/oder Propylenoxid mit Polyolen, wie z.B. Glycerin, Trimethylolpropan, Triethanolamin, Ethylendiamin, ortho-Toluyldiamin, Mischungen aus Zucker und/oder Sorbit mit Glycolen u.a. zugänglich sind.

Als Komponente b3) werden difunktionelle Polyoxyalkylenpolyole im Hydroxylzahlbereich von 150 bis 550 verwendet, die bevorzugt durch Umsetzung von Ethylenoxid und/oder Propylenoxid mit Glycolen, wie z.B. Ethylen-, Diethylen-, 1,2- oder 1,3-Propylenglycol, 1,4-Butandiol u.a. zugänglich sind.

Als Komponente b4) finden difunktionelle Polyester im Hydroxylzahlbereich von 200 bis 350 Verwendung, die bevorzugt durch Veresterung von Phthalsäureanhydrid und/oder Adipinsäure mit Ethylen-, Diethylen-, Propylenglycol u.a. hergestellt werden können. Besonders bevorzugt ist die Verwendung eines Polyesters aus Phthalsäureanhydrid, Diethylenglycol und Ethylenoxid.

Als Komponente e) werden vorzugsweise 0,5 bis 2 Gew.% Silicon-Schaumstabilisatoren eingesetzt.

Als Schaumstabilisatoren e) eignen sich beispielsweise Siloxan-Polyoxyalkylen-Copolymere, Organopolysiloxane, ethoxylierte Fettalkohole und Alkylphenole und Ricinusöl- bzw. Ricinolsäureester.

Als Zellöffner f) wirken beispielweise Paraffine, Polybutadiene, Fettalkohole und Dimethylpolysiloxane.

Weitere Beispiele von gegebenenfalls erfindungsgemäß mit zu verwendenden Hilfs- und Zusatzmitteln g) sind Emulgatoren, Reaktionsverzögerer, Stabilisatoren gegen Alterungs- und Witterungseinflüsse, Weichmacher, anorganische flammhemmende Substanzen, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe. Als Emulgatoren seien beispielsweise genannt ethoxylierte Alkylphenole, Alkalimetallsalze von Fettsäuren, Alkalimetallsalze von sulfatierten Fettsäuren, Alkalimetallsalze von Sulfonsäuren und Salze von Fettsäuren und Aminen.

Nähere Angaben über Verwendungs- und Wirkungsweise der oben genannten Hilfs- und Zusatzmittel sind z.B. im Kunststoff-Handbuch, Polyurethane, Band VII, Carl Hanser Verlag, München, Wien, 2. Auflage, 1983 beschrieben.

Die Schaumstoffherstellung erfolgt nach der Doppeltransportband-Technologie. Als vorteilhaft hat es sich erwiesen, nach dem Zweikomponenten-Verfahren zu arbeiten und die Komponenten b)-g) als eine Verarbeitungskomponente (B) zu vereinigen und mit den organischen Polyisocyanaten a) als Verarbeitungskomponente (A) umzusetzen.

Die Verarbeitungskomponenten (A) und (B) werden bei Temperaturen von 15 bis 40 °C, vorzugsweise von 20 bis 35 °C, in einem Mischaggregat in einem Verhältnis, entsprechend einer Kennzahl von 95 bis 125, bevorzugt 100 bis 120, vermischt.

Als Mischaggregat kann beispielsweise ein Niederdruck-Mischkopf verwendet werden.

Die Mischung aus (A) und (B) wird kontinuierlich beispielsweise mit einem oszillierenden Mischkopf zwischen zwei Deckschichten eingetragen, um zwischen den auf 40 bis 90°C geheizten Transportbändern aufzuschäumen. Nach dem Durchlaufen der Transportbänder und Abkühlen werden gegebenenfalls eine oder beide Deckschichten entfernt und der so hergestellte Schaum gegebenenfalls geschnitten.

Die nach dem erfindungsgemäßen Verfahren hergestellten verdichteten PUR-Hartschaumstoffe weisen eine Dichte von 20 bis 50 kg/m³, vorzugsweise 25 bis 45 kg/m³, besonders bevorzugt von 30 bis 40 kg/m³ auf.

Die Offenzelligkeit, gemessen nach DIN EN ISO 4590 ohne Korrektur, liegt zwischen 30 und 90%.

Besonders eignen sich die nach dem erfindungsgemäßen Verfahren hergestellten PUR-Hartschaumstoffe als Zwischenschicht zur Herstellung von Sandwichelementen nach dem Kaltformverfahren und zu deren Verwendung als Automobil-Innenverkleidung, insbesondere als Dachhimmel, Dachversteifungsplatte und Säulenverkleidung.

Die Erfindung wird in den nachfolgenden Ausführungsbeispielen näher erläutert.

### Beispiele 1-3 und Vergleichsbeispiele:

Verwendete Produkte:
DABCO^{®} NE-1060 der Air Products GmbH - einbaubarer tertiärer Amin-Katalysator
Niax^{®} Silicone SR 272 von GE Silicones - Stabilisator, Siloxan-Polyalkylenoxidcopolymer
Ortegol^{®} 501 der Degussa Goldschmidt AG - Zellöffner, Polybutadien-Diisononylphthalat

### Herstellung der PUR-Hartschaumstoffe

### Beispiel 1

Eine Mischung (Komponente B) aus
25,10 Gew.-Teilen Polyetheralkohol (b1) auf Basis Glycerin/Propylenoxid/Ethylenoxid, OH-Zahl 28 mg KOH/g, Funktionalität 3,
14,65 Gew.-Teilen Polyetheralkohol (b2) auf Basis Trimethylolpropan/Propylenoxid, OH-Zahl 550 mg KOH/g, Funktionalität 3,
10,00 Gew.-Teilen Polyetheralkohol (b2) auf Basis Triethanolamin/Propylenoxid, OH-Zahl 500 mg KOH/g, Funktionalität 3,
23,65 Gew.-Teilen Polyesteretheralkohol (b4) auf Basis Phthalsäureanhydrid/Diethylenglycol/Ethylenoxid, OH-Zahl 300 mg KOH/g, Funktionalität 2,
8,19 Gew.-Teilen Polyetheralkohol (b3) auf Basis Propylenglycol/Propylenoxid/Ethylenoxid, OH-Zahl 190 mg KOH/g, Funktionalität 2,
5,92 Gew.-Teilen Glycerin (b5),
1,97 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607
2,00 Gew.-Teilen tertiäres Amin (d), (DABCO^{®} NE-1060 von Air Products),
1,48 Gew.-Teilen Silikon-Schaumstabilisator (e),(Niax^{®} Silicone SR 272 von GE Silicones),
2,50 Gew.-Teilen Zellöffner (f), (Ortegol^{®} 501 der Degussa Goldschmidt AG),
4,54 Gew.-Teilen Wasser (c)
wurde mit

158,0 Gew.-Teilen einer Mischung (A-Komponente) aus Diphenylmethandiisocyanaten und Polyphenylpolymethylenpolyisocyanaten mit einem Gehalt an Diphenylmethandiisocyanat-Isomeren von 88 Gew.-% und einem NCO-Gehalt von 32,5 Gew.% vermischt.

### Beispiel 2

Eine Mischung (Komponente B) aus
25,10 Gew.-Teilen Polyetheralkohol auf Basis Glycerin/Propylenoxid/Ethylenoxid, OH-Zahl 28 mg KOH/g, Funktionalität 3,
14,65 Gew.-Teilen Polyetheralkohol auf Basis Trimethylolpropan/Propylenoxid, OH-Zahl 550 mg KOH/g, Funktionalität 3,
10,00 Gew.-Teilen Polyetheralkohol auf Basis Ethylendiamin/Propylenoxid, OH-Zahl 630 mg KOH/g, Funktionalität 4,
23,65 Gew.-Teilen Polyesteretheralkohol auf Basis Phthalsäureanhydrid/Diethylenglycol/Ethylenoxid, OH-Zahl 300 mg KOH/g, Funktionalität 2,
8,19 Gew.-Teilen Polyetheralkohol auf Basis Propylenglycol/Propylenoxid/Ethylenoxid, OH-Zahl 190 mg KOH/g, Funktionalität 2,
5,92 Gew.-Teilen Glycerin,
1,97 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607
2,00 Gew.-Teilen tertiäres Amin, DABCO^{®} NE-1060 von Air Products,
1,48 Gew.-Teilen Silikon-Schaumstabilisator, Niax^{®} Silicone SR 272 von GE Silicones,
1,50 Gew.-Teilen Zellöffner, Ortegol^{®} 501 der Degussa Goldschmidt AG,
4,54 Gew.-Teilen Wasser
   wurde mit
161,0 Gew.-Teilen einer Mischung (A-Komponente) aus Diphenylmethandiisocyanaten und Polyphenylpolymethylenpolyisocyanaten mit einem Gehalt an Diphenylmethandiisocyanat-Isomeren von 88 Gew.% und einem NCO-Gehalt von 32,5 Gew.-% vermischt.

### Beispiel 3

Eine Mischung (Komponente B) aus
25,10 Gew.-Teilen Polyetheralkohol auf Basis Glycerin/Propylenoxid/Ethylenoxid, OH-Zahl 28 mg KOH/g, Funktionalität 3,
14,65 Gew.-Teilen Polyetheralkohol auf Basis Trimethylolpropan/Propylenoxid, OH-Zahl 550 mg KOH/g, Funktionalität 3,
10,00 Gew.-Teilen Polyetheralkohol auf Basis Ethylendiamin/Propylenoxid, OH-Zahl 630 mg KOH/g, Funktionalität 4,
23,65 Gew.-Teilen Polyesteretheralkohol auf Basis Phthalsäureanhydrid/Diethylenglycol/Ethylenoxid, OH-Zahl 300 mg KOH/g, Funktionalität 2,
8,19 Gew.-Teilen Polyetheralkohol auf Basis Propylenglycol/Propylenoxid/Ethylenoxid, OH-Zahl 190 mg KOH/g, Funktionalität 2,
5,92 Gew.-Teilen Glycerin,
1,97 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607
2,00 Gew.-Teilen tertiäres Amin, DABCO^{®} NE-1060 von Air Products,
1,48 Gew.-Teilen Silikon-Schaumstabilisator, Niax^{®} Silicone SR 272 von GE Silicones,
1,50 Gew.-Teilen Zellöffner, Ortegol^{®} 501 der Degussa Goldschmidt AG,
4,54 Gew.-Teilen Wasser
wurde mit

163,0 Gew.-Teilen einer Mischung (A-Komponente) aus Diphenylmethandiisocyanaten und Polyphenylpolymethylenpolyisocyanaten mit einem Gehalt an Diphenylmethandiisocyanat-Isomeren von 70 Gew.-% und einem NCO-Gehalt von 32,0 Gew.-% vermischt.

### Vergleichsbeispiel 1

Eine Mischung (Komponente B) aus
26,60 Gew.-Teilen Polyetheralkohol auf Basis Glycerin/Propylenoxid/Ethylenoxid, OH-Zahl 28 mg KOH/g, Funktionalität 3,
24,65 Gew.-Teilen Polyetheralkohol auf Basis Trimethylolpropan/Propylenoxid, OH-Zahl 550 mg KOH/g, Funktionalität 3,
24,65 Gew.-Teilen Polyesteretheralkohol auf Basis Phthalsäureanhydrid/Diethylenglycol/Ethylenoxid, OH-Zahl 300 mg KOH/g, Funktionalität 2,
8,19 Gew.-Teilen Polyetheralkohol auf Basis Propylenglycol/Propylenoxid/Ethylenoxid, OH-Zahl 190 mg KOH/g, Funktionalität 2,
5,92 Gew.-Teilen Glycerin, Funktionalität 2, 1,97 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607 2,00 Gew.-Teilen tertiäres Amin, DABCO^{®} NE-1060, 1,48 Gew.-Teilen Silikon-Schaumstabilisator, Niax^{®} Silicone SR 272, 4,54 Gew.-Teilen Wasser
wurde mit

160 Gew.-Teilen einer Mischung (A-Komponente) aus Diphenylmethandiisocyanaten und Polyphenylpolymethylenpolyisocyanaten mit einem Gehalt an Diphenylmethandiisocyanat-Isomeren von 88 Gew.-% und einem NCO-Gehalt von 32,5 Gew.-% vermischt.

### Vergleichsbeispiel 2

Eine Mischung (Komponente B) aus
25,10 Gew.-Teilen Polyetheralkohol auf Basis Glycerin/Propylenoxid/Ethylenoxid, OH-Zahl 28 mg KOH/g, Funktionalität 3,
14,65 Gew.-Teilen Polyetheralkohol auf Basis Trimethylolpropan/Propylenoxid, OH-Zahl 550 mg KOH/g, Funktionalität 3,
10,00 Gew.-Teilen Polyetheralkohol auf Basis Ethylendiamin/Propylenoxid, OH-Zahl 630 mg KOH/g, Funktionalität 4,
23,65 Gew.-Teilen Polyesteretheralkohol auf Basis Phthalsäureanhydrid/Diethylenglycol/Ethylenoxid, OH-Zahl 300 mg KOH/g, Funktionalität 2,
8,19 Gew.-Teilen Polyetheralkohol auf Basis Propylenglycol/Propylenoxid/Ethylenoxid, OH-Zahl 190 mg KOH/g, Funktionalität 2,
5,92 Gew.-Teilen Glycerin,
1,97 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607,
2,00 Gew.-Teilen tertiäres Amin, DABCO^{®} NE-1060 von Air Products,
1,48 Gew.-Teilen Silikon-Schaumstabilisator, Niax® Silicone SR 272 von GE Silicones,
1,50 Gew.-Teilen Zellöffner, Ortegol^{®} 501 der Degussa Goldschmidt AG, und
4,54 Gew.-Teilen Wasser
wurde mit

166 Gew.-Teilen einer Mischung (A-Komponente) aus Diphenylmethan-diisocyanaten und Polyphenyl-polymethylen-polyisocyanaten mit einem Gehalt an Diphenylmethandiisocyanat-Isomeren von 45 Gew.-% und einem NCO-Gehalt von 31,5 Gew.-% vermischt.

Entsprechend einer NCO-Kennzahl von 110 wurden die A-Komponente und die B-Komponente bei 23°C intensiv gemischt, in eine mit Papier ausgekleidete Holzbox (61 Volumen) eingefüllt und dort geschäumt.

Die hergestellten Schaumstoffe hatten folgende Eigenschaften:

**Tabelle**

| | **Bespiel 1** | **Bespiel 2** | **Bespiel 3** | **Vergleichs bespiel 1** | **Vergleichs bespiel 2** |
|---|---|---|---|---|---|
| Startzeit [s] | 18 | 18 | 20 | 22 | 23 |
| Abbindezeit [s] | 42 | 43 | 42 | 48 | 42 |
| Raumgewicht¹ [kg/m³] | 28 | 24 | 32 | 30 | 29 |
| Offenzelligkeit² [%] | 98 | 97 | 97 | 79 | 98 |
| Zugfestigkeit³[kPa] | 238 | 236 | 246 | 281 | 176 |
| Bruchdehnung³ [%] | 28 | 27 | 19 | 25 | 14 |

| | | | | | |
|---|---|---|---|---|---|
| 1) nach DIN 53420, 2) nach DIN EN ISO 4590 (nicht korr.), 3) nach DIN 53430 | | | | | |

Die Schaumstoffe gemäß Beispiel 1 bis 3 sind gut verformbar.

Mit der Rezeptur nach Beispiel 2 auf einer Doppeltransportbandanlage werden Platten mit 13,5 mm Wandstärke erhalten, die nach dem Entfernen der Deckschichten mittels des Kaltformverfahrens zu Dachhimmeln ohne Auftreten von Schaumbrüchen verarbeitet werden konnten. Der Schaumstoff hat eine Dichte von 38 kg/m³, Offenzelligkeit von 41 %, Zugfestigkeit von 400 kPa und Bruchdehnung von 22 %.

Schaumstoffe, die nach der Rezeptur des Vergleichsbeispiels 1 erhalten wurden, besitzen keine ausreichende Offenzelligkeit zur Herstellung von PU-Hartschaumstoffplatten zur Verarbeitung nach dem Kaltformverfahren.

Schaumstoffe, die nach der Rezeptur des Vergleichsbeispiels 2 erhalten wurden, besitzen keine ausreichenden Dehnungs- und Verformungseigenschaften zur Herstellung von Dachhimmeln nach dem Kaltformverfahren.

## Patentansprüche

1. Kontinuierliches Verfahren zur Herstellung von kaltverformbaren, verdichteten, offenzelligen Polyurethan-Hartschaumstoffen nach dem Doppeltransportband-Verfahren, wobei
I) die Komponente A) und die Komponente B) in einem Mischaggregat bei Temperaturen von 20 bis 35°C in einem Verhältnis gemischt werden, dass die NCO-Kennzahl 95 bis 125 beträgt,
II) die Mischung aus I) zwischen die beiden Deckschichten einer Doppeltransportbandanlage bei Temperaturen von 40 bis 100°C eingetragen wird,
III) nach dem Durchlaufen des Bandes und nach Abkühlung gegebenenfalls eine oder beide Deckschichten entfernt werden und abschließend das abgekühlte Produkt gegebenenfalls geschnitten wird,
**dadurch gekennzeichnet, dass** als Komponente A)
a) eine organische Polyisocyanatkomponente aus
a1) 70 bis 90 Gew.-% monomeres Diphenylmethandiisocyanat mit einem Anteil von 18 bis 32 Gew.%, bezogen auf die organische Polyisocyanat-komponente, 2,4'-Diphenylmethandiisocyanat und
a2) 10 bis 30 Gew.-% Polyphenylpolymethylenpolyisocyanat
und dass als Komponente B)
b) Polyhydroxylverbindungen aus
b1) 20 bis 35 Gew.-%, bezogen auf die Komponente B), Polyoxyalkylenpolyolen mit einer Funktionalität von 2 bis 3 und mit einer Hydroxylzahl von 25 bis 40,
b2) 20 bis 30 Gew.-%, bezogen auf die Komponente B), Polyoxyalkylenpolyolen mit einer Funktionalität von 3 bis 4 und mit einer Hydroxylzahl von 400 bis 650,
b3) 5 bis 15 Gew.-%, bezogen auf die Komponente B), Polyoxyalkylenpolyolen mit einer Funktionalität von 2 und mit einer Hydroxylzahl von 150 bis 550,
b4) 15 bis 30 Gew.-%, bezogen auf die Komponente B), Polyesterpolyolen mit einer Funktionalität von 2 und mit einer Hydroxylzahl von 200 bis 350,
b5) 4 bis 7 Gew.-%, bezogen auf die Komponente B), Glycerin
c) 3,5 bis 5,5 Gew.%, bezogen auf die Komponente B), Wasser als Treibmittel,
d) 0,5 bis 4 Gew.%, bezogen auf die Komponente B), Katalysatoren,
e) 0,5 bis 2 Gew.-%, bezogen auf die Komponente B), Schaumstabilisatoren,
f) 1 bis 3,5 Gew.-%, bezogen auf die Komponente B), Zellöffner,
g) 0 bis 7 Gew.-%, bezogen auf die Komponente B), Hilfsmitteln und/oder Zusatzstoffen
eingesetzt werden.

## Claims

1. Continuous process for the production of cold-formable, compressed, open-cell rigid polyurethane foams by the double conveyor belt process, wherein
I) the component A) and the component B) are mixed in a mixer at temperatures of 20 to 35°C in a ratio such that the NCO index is 95 to 125,
II) the mixture from I) is introduced between the two facings of a double conveyor belt at temperatures of 40 to 100°C, and
III) after the belt has passed through, and after cooling, optionally one or both of the facings are removed and, finally, the cooled product is cut,
**characterized in that** the component A) used consists of
a) an organic polyisocyanate component made up of
a1) 70 to 90 wt.% of monomeric diphenylmethane diisocyanate containing 18 to 32 wt.%, based on the organic polyisocyanate component, of 2,4'-diphenylmethane diisocyanate, and
a2) 10 to 30 wt.% of polyphenylpolymethylene polyisocyanate
and **in that** the component B) used consists of
b) polyhydroxyl compounds made up of
b1) 20 to 35 wt.%, based on the component B), of polyoxyalkylene-polyols having a functionality of 2 to 3 and a hydroxyl number of 25 to 40,
b2) 20 to 30 wt.%, based on the component B), of polyoxyalkylene-polyols having a functionality of 3 to 4 and a hydroxyl number of 400 to 650,
b3) 5 to 15 wt.%, based on the component B), of polyoxyalkylene-polyols having a functionality of 2 and a hydroxyl number of 150 to 550,
b4) 15 to 30 wt.%, based on the component B), of polyesterpolyols having a functionality of 2 and a hydroxyl number of 200 to 350, and
b5) 4 to 7 wt.%, based on the component B), of glycerol,
c) 3.5 to 5.5 wt.%, based on the component B), of water as blowing agent,
d) 0.5 to 4 wt.%, based on the component B), of catalysts,
e) 0.5 to 2 wt.%, based on the component B), of foam stabilizers,
f) 1 to 3.5 wt.%, based on the component B), of cell opener and
g) 0 to 7 wt.%, based on the component B), of auxiliary substances and/or additives.

## Revendications

1. Procédé continu pour la préparation de mousses rigides de polyuréthane déformables à froid, comprimées, à alvéoles ouvertes selon le procédé à double bande transporteuse,
dans lequel,
I) le constituant A) et le constituant B) sont mélangés dans un agrégat de mélange à des températures de 20 à 35°C dans un rapport tel que l'indice NCO est de 95 à 125,
II) le mélange de I) est introduit entre les deux couches de couverture d'une installation à double bande transporteuse à des températures de 40 à 100°C,
III) une ou les deux couches de couverture sont après le passage de la bande et après refroidissement éventuellement éliminées et le produit refroidi est ensuite éventuellement découpé,
**caractérisé en ce que** l'on utilise comme constituant (A)
a) un constituant de polyisocyanate organique constitué de
a1) de 70 à 90 % en poids de diisocyanate de diphénylméthane monomère avec une part de 18 à 32 % en poids, rapporté au constituant de polyisocyanate organique, de diisocyanate de 2,4'-diphénylméthane et
a2) de 10 à 30 % en poids de polyisocyanate de polyphénylpolyméthylène
et **en ce que** l'on utilise comme constituant B)
b) des composés polyhydroxyles constitués de
b1) de 20 à 35 % en poids, rapporté au constituant B), de polyoxyalkylènepolyols avec une fonctionnalité de 2 à 3 et avec un indice hydroxyle de 25 à 40,
b2) de 20 à 30 % en poids, rapporté au constituant B), de polyoxylalkylènepolyols avec une fonctionnalité de 3 à 4 et avec un indice hydroxyle de 400 à 650,
b3) de 5 à 15 % en poids, rapporté au constituant B), de polyoxyalkylènepolyols avec une fonctionnalité de 2 et avec un indice hydroxyle de 150 à 550,
b4) de 15 à 30 % en poids, rapporté au constituant B), de polyesterpolyols avec une fonctionnalité de 2 et avec un indice hydroxyle de 200 à 350,
b5) de 4 à 7 % en poids, rapporté au constituant B), de glycérine,
c) de 3,5 à 5,5 % en poids, rapporté au constituant B), d'eau comme agent moussant,
d) de 0,5 à 4 % en poids, rapporté au constituant B), de catalyseurs,
e) de 0,5 à 2 % en poids, rapporté au constituant B), de stabilisateurs de mousse,
f) de 1 à 3,5 % en poids, rapporté au constituant B), d'agent d'ouverture d'alvéoles,
g) de 0 à 7 % en poids, rapporté au constituant B), d'auxiliaires et/ou d'additifs.
